Europäisches Patentamt

European Patent Office

Office européen des brevets

(11) Veröffentlichungsnummer: **0 279 869**
**A1**

(12) # EUROPÄISCHE PATENTANMELDUNG

(21) Anmeldenummer: 87102186.1

(51) Int. Cl.⁴ **F16B 21/10**

(22) Anmeldetag: **17.02.87**

(43) Veröffentlichungstag der Anmeldung:
**31.08.88 Patentblatt 88/35**

(84) Benannte Vertragsstaaten:
**ES FR GB IT NL SE**

(71) Anmelder: **SPRINGFIX BEFESTIGUNGSTECHNIK GMBH**
**Brühlstrasse 38**
**D-7335 Salach(DE)**

(72) Erfinder: **Benik, Wernfried**
**Grünenbergstrasse 334**
**D-7336 Uhingen(DE)**

(74) Vertreter: **Bardehle, Heinz, Dipl.-Ing. et al**
**Patent- und Rechtsanwälte**
**Bardehle-Pagenberg-Dost-Altenburg &**
**Partner Galileiplatz 1 Postfach 86 06 20**
**D-8000 München 86(DE)**

(54) **Steckbolzen mit Sicherungsbügel.**

(57) Aus Blech geformter Steckbolzen zum Verbinden eines festen Bauteils mit einem zweiten Bauteil, der eine den Steckbolzen bildende zylindrische Hülse (1) und einen damit einstückig über ein Verbindungsstück verbundenen Sicherungsbügel (2) aufweist, der an einem der beiden Bauteile einrastbar ist, wobei die Hülse durch Rollen mit axial verlaufendem Spalt geformt ist, und wobei das Verbindungsstück auf der Stirnseite der Rolle gegenüber dem Spalt ansetzt.

Fig. 1

EP 0 279 869 A1

## Steckbolzen mit Sicherungsbügel

Die vorliegende Erfindung betrifft einen aus Blech geformten Steckbolzen zum Verbinden eines ersten Bauteils mit einem zweiten Bauteil, der eine den Steckbolzen bildende zylindrische Hülse und einen damit einstückig über ein Verbindungsstück verbundenen Sicherungsbügel aufweist, der an einem der beiden Bauteile einrastet.

Ein derartiger Steckbolzen ist aus der DE-PS 33 47 502 bekannt geworden, wobei die Hülse dieses Steckbolzens aus zwei voneinander getrennten an dem dem Sicherungsbügel gegenüberliegenden Ende durch einen Steg miteinander verbundenen Schaftteilen besteht. Die Schaftteile haben jeweils die Form eines halben Hohlzylinders.

Dieser bekannte Steckbolzen hat einige Nachteile, die insbesondere dann zum Tragen kommen, wenn dieser Steckbolzen bei der Montage von sicherheitsrelevanten Funktionsteilen, wie z.B. Bremsanlagen, verwendet wird. Die Verbindung der beiden Schafthälften erfolgt ausschließlich über einen Steg. Falls dieser Steg, z. B. infolge einer Werkstoffzerrüttung, bricht, wird die entsprechende Bauteilgruppe sofort außer Funktion gesetzt. Dieses kann, gerade bei Bremsanlagen, zu verheerenden Folgen führen. Ein weiterer Nachteil ist, daß sich die Schafthälften nicht sehr exakt formen lassen und daß durch das Zusammendrücken über den Steg eine gewissen Restfederkraft verbleibt, durch die die beiden Schafthälften nach außen streben. Dadurch wird jedoch die Paßform der Hülse in der Bauteilbohrung verschlechtert und die Reibung durch den Aufspreizeffekt erhöht.

Die vorliegende Erfindung stellt sich die Aufgabe, einen Steckbolzen der eingangs genannten Art zu schaffen, der die Nachteile des Standes der Technik vermeidet, einfach herstellbar ist und der auch erhöhten Sicherheitsanforderungen gerecht wird.

Diese Aufgabe wird bei einem Steckbolzen der eingangs erwähnten Art erfindungsgemäß durch den kennzeichnenden Teil des Anspruchs I gelöst.

Der erfindungsgemäße Steckbolzen hat den Vorteil, daß das gerollte zylindrische Bolzenteil mit großer Genauigkeit hergestellt werden kann, so daß eine einwandfreie Funktionserfüllung gewährleistet ist. Da nur eine axial verlaufende Naht vorhanden ist, ist die Formsteifigkeit des Bolzens und insbesondere die Scherfestigkeit des Bolzens wesentlich höher als beim Stand der Technik. Ein weiterer Vorteil ergibt sich dadurch, daß die Baulänge des Bolzenteils durch den Fortfall eines Steges verkürzt werden kann, so daß der erfindungsgemäße Bolzen auch bei beengten Raumverhältnissen einsetzbar ist.

Durch das Ansetzen des Verbindungsstücks gegenüber dem axial verlaufenden Spalt der Hülse wird eine einfache, materialsparende Abwicklung des Bauteils möglich.

Gemäß einer zu bevorzugenden Ausführungsform weist der Sicherungsbügel eine sich senkrecht zur Achse des zylindrischen Bolzenteils erstreckende Anlagefläche auf, die mit Abkantungen zum Umgreifen des ersten oder des zweiten Bau teils versehen ist. Vorzugsweise wird dabei an der Übergangstelle vom zylindrischen Bolzenteil zum Sicherungsbügel eine Verstärkungsrippe vorgesehen.

Gemäß einer weiteren zu bevorzugenden Ausführungsform sind die Abkantflächen im wesentlichen rechtwinklig zueinander angeordnet, so daß sie ein Bauteil mit rechteckförmigem Querschnitt umgreifen können. Die Abkantungen werden dabei günstigerweise so gestaltet, daß sich ein federnder Druck auf das Bauteil ergibt. Die Abkantflächen können mit einer oder mehreren Ausstanzungen zum Einrasten des Sicherungsbügels an der der Anlagefläche gegenüberliegenden Seite des Bauteils versehen werden.

Bei zylindrischen Bauteilen wird vorzugsweise eine kreisringförmige Abkantung verwendet, die einen unter I80 Grad betragenden Ausschnitt aufweist und federnd auf dem zylindrischen Bauteil festrastet.

Eine weitere Ausführungsform des erfindungsgemäßen Steckbolzens wird dann eingesetzt, wenn sehr hohe Sicherungsanforderungen zu erfüllen sind. Derartige Sicherheitsanforderungen entstehen z.B., wenn der Steckbolzen zum gelenkigen Verbinden von Teilen einer Bremsanlage in einem Kraftfahrzeug eingesetzt wird. Ein Bruch der Verbindung zwischen dem Sicherungsbügel und dem zylindrischen Bolzenteil kann hier dazu führen, daß der Bolzen aus der Verbindung auswandert und die Bremsanlage funktionsunfähig wird. Wenn auch die prozentuale Wahrscheinlichkeit für einen solchen Ausfall sehr gering ist, muß insbesondere in Anbetracht der hohen Zahl der hergestellten Kraftfahrzeuge damit gerechnet werden, daß einzelne Fahrzeuge von diesem Versagen betroffen werden. Die Erfindung schlägt deshalb eine zu bevorzugende Ausführungsform vor, bei der das zylindrische Bolzenteil zusätzliche Sicherungselemente aufweist. Diese Sicherungselemente werden vorzugsweise durch Federzungen gebildet, die aus der Mantelfläche des zylindrischen Bolzenteils ausgestanzt und in geeigneter Weise gebogen werden. Das zylindrische Bolzenteil wird dann so lange gestaltet, daß es mit den Federzungen aus den dem Sicherungsbügel gegenüberliegenden Teil der Bauteilbohrungen austritt, so daß die Federzungen dort eirasten können. Vorzugsweise weist das zylindrische Bolzenteil an der mit dem Sicherungsbügel verbundenen Seite zusätzliche Abkantungen auf, die den Bolzen auch nach dem Abbrechen des Sicherungsbügels halten. Entsprechend den jeweiligen Anforderungen können ein, zwei oder auch mehr Federzungen um den Umfang des Bolzenteils verteilt werden.

Bei einer weiteren, zu bevorzugenden Ausführungsform wird eine sehr effektive zusätzliche Sicherung dadurch erreicht, daß eine Federzunge vorgesehen wird, die von einer Seite des Mantels des Bolzenteils ausgehend um einen entsprechenden Radius gebogen ist, und in eine Aussparung in der gegenüberliegenden Seite des Bolzenmantels eingreift. Diese Federzunge hat einen verhältnismäßig großen Federweg und kann deshalb relativ weit über den Außendurchmesser des Bolzenteils überstehen, ohne daß Schwierigkeiten bei der Montage entstehen. Die Federzunge kann an der dem Bauteil zugewandten Seite derart abgekantet werden, daß die Federzunge direkt an dem Bauteil anliegt.

Die Steifigkeit der Federzunge kann dabei entsprechend den jeweiligen Einsatzbedingungen durch den Radius beeinflußt werden, wobei ein kleiner Radius und ein sich daran anschließender, im wesentlichen gerade verlaufender Teil zu einer hohen Steifigkeit und ein größerer Radius zu einer geringeren Steifigkeit führt.

Zusätzliche zu bevorzugende Ausführungsformen sind Gegenstand der Unteransprüche.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. Darin zeigen:

Fig. I eine perspektivische Ansicht eines ersten Ausführungsbeispiels;

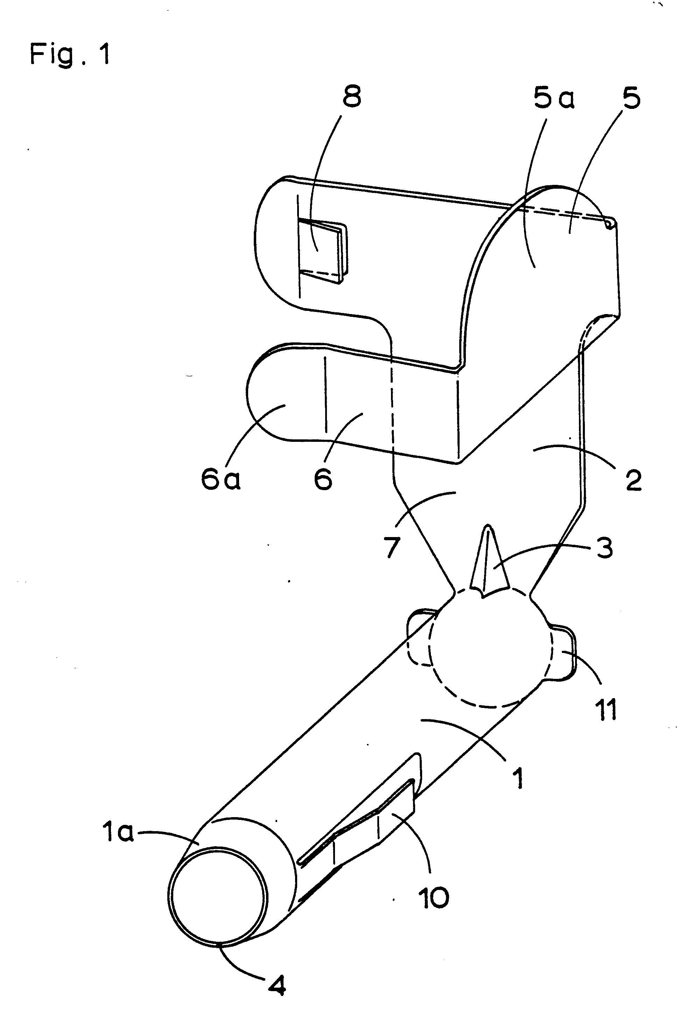

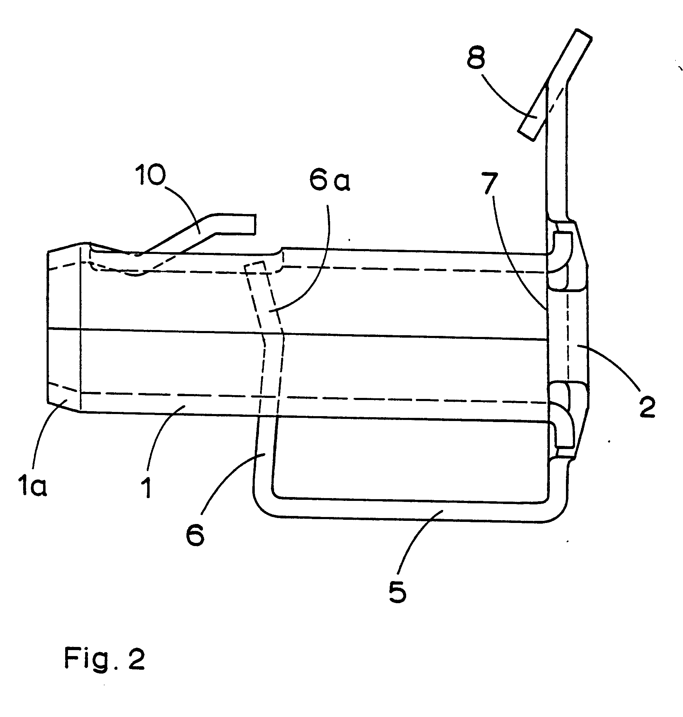

Fig. 2 eine Draufsicht auf das Ausführungsbeispiel gemäß Fig. I;

Fig. 3 ein weiteres Ausführungsbeispiel des erfindungsgemäßen Steckbolzens;

Fig. 4 ein weiteres Ausführungsbeispiel des erfindungsgemäßen Steckbolzens zum Einrasten auf runden Bauteilen

Fig. 5 eine Abwicklung eines Ausführungsbeispiels, das in etwa der Fig. I entspricht

Ein erstes Ausführungsbeispiel des erfindungsgemäßen Steckbolzens wird in den Fig. I und 2 gezeigt. Der Steckbolzen besteht aus dem als Hülse ausgebildeten zylindrischen Bolzenteil I und dem damit einstückig verbundenen Sicherungsbügel 2. An der Verbindungsstelle zwischen dem Bolzenteil I und dem Sicherungsbügel 2 ist eine Verstärkungsrippe 3 vorgesehen. Das zylindrische Bolzenteil I ist gerollt und weist eine Naht 4 auf, die parallel zur Bolzenachse verläuft. Der Sicherungsbügel weist zwei rechtwinklige Abkantungen 5 und 6 auf, mit denen der Bügel ein Bauteil mit rechteckigem Querschnitt umgreifen kann. Die Anlagefläche 7 des Sicherungsbügels ist des weiteren mit einer ausgestanzten Federzunge 8 versehen, die bei der Montage hinter dem Bauteil einrastet. Die Abkantung 6 ist elastisch gestaltet und bezüglich ihres Abstandes zur Anlagefläche 7 so bemessen, daß beim Aufsetzen auf das Bauteil eine Vorspannung entsteht, die den Steckbolzen sichert. Zur Erleichterung der Montage ist die Abkantung 6 mit einer Abschrägung 6a versehen. Des weiteren weist die Abkantung 5 eine abgerundete Fläche 5a auf, die als Druckfläche für die Montage dient.

Als zusätzliches Sicherungselement weist das zylindrische Bolzenteil I eine aus dem Zylindermantel ausgestanzte und nach außen gebogene Federzunge 10 auf. Ferner sind an der gegenüberliegenden Seite des Bolzenteils Abkantungen II vorgesehen, die das Bolzenteil I im Zusammenwirken mit der Federzunge 10 auch dann in der Bohrung halten, wenn der Sicherungsbügel 2 vom Bolzenteil abbricht.

Die gezeigte Ausführungsform weist eine Federzunge auf. Es können jedoch auch zwei oder mehr Federzungen um den Umfang verteilt werden. An seinem vorderen Teil weist das bolzenförmige Teil I im übrigen eine Anfasung la auf, die das Einführen des Bolzens in die entsprechende Bauteilbohrung erleichtert. Der erfindungsgemäße Steckbolzen ist aus Federbannstahl gefertigt und nach dem Abkant-und Rollvorgang gehärtet.

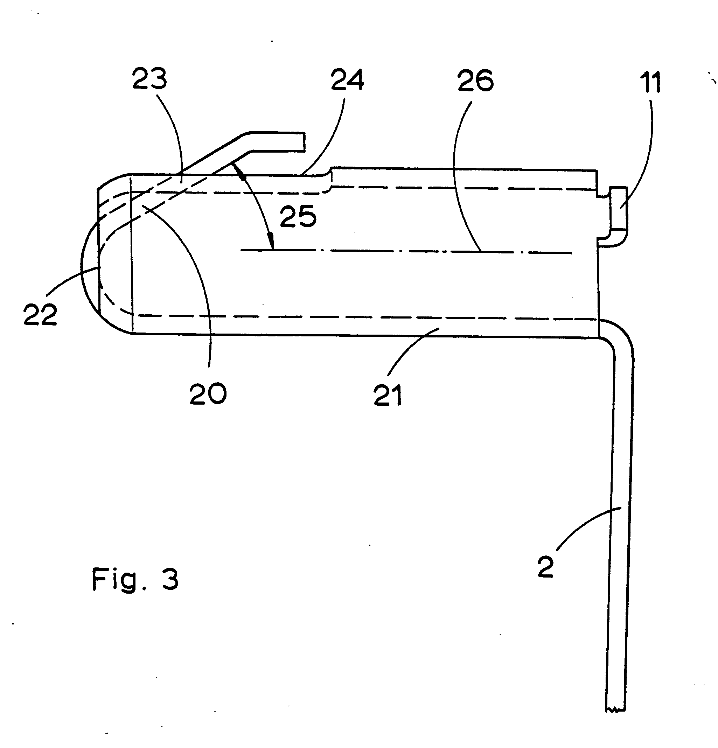

Eine weitere Ausführungsform zeigt die Fig. 3, wobei für die Bezeichnung bei identischen Teilen die gleichen Bezugszeichen verwendet werden wie in den Fig. I und 2. Diese Ausführungsform weist eine gegenüber der vorstehenden Ausführungsform geänderte Federzunge 20 auf. Diese Federzunge 20 geht von der einen Seite des Zylindermantels des Bolzenteils 2I aus und wird über einen Radius 22 und ein gerades Teil 23 durch eine Aussparung 24 im Zylindermantel auf die andere Seite des bolzenförmigen Teils 2I geführt. Beim Einführen des Bolzens in die dafür vorgesehene Bohrung federt die Federzunge 2I in gleicher Weise wie die Federzunge 10 bei der vorstehend beschriebenen Ausführungsform bis zu dem äußeren Zylinderdurchmesser zurück, so daß die Montage problemlos erfolgen kann. Nach dem Durchtritt des bolzenförmigen Teils durch die entsprechende Bohrung des Bauteils, federt die Federzunge zurück und verhindert so eine Bewegung entgegengesezt zur Montagerichtung. Die in diesem Ausführungsbeispiel beschriebene Form der Federzunge hat den Vorteil, daß sie einen großen Federweg aufweist, was einen relativ großen Überstand der Federzunge über den Außenumfang des bolzenförmigen Teils möglich macht. Die Steifigkeit kann durch Wahl des Radius 22 beeinflußt werden, wobei ein kleinerer Radius zu einer höheren Steifigkeit führt. Einen weiteren wesentlichen Einfluß auf die Festigkeit hat auch der Winkel 25, den der gerade Abschnitt 23 der Federzunge mit der Zylinderachse 26 des bolzenförmigen Teils 21 einschließt. Ist dieser Winkel groß, steht die Federzunge also verhältnismäßig senkrecht zur Zylinderachse, ist die von der Federzunge auf das Bauteil ausgeübte Kraft verhältnismäßig klein. Je kleiner der Winkel 25 ist, um so größer ist auch die von der Federzunge auf das Bauteil ausgeübte Kraft. Diese Tatsache kann ausgenutzt werden, um mittels der Federzunge eine Vorspannung auf das Bauteil aufzubringen, die den Bewegungsspielraum des Steckbolzens vermindert. Aufgrund der Abkantung II ist das durch die Federzung 23 gebildete Sicherungselement auch dann wirksam, wenn der Sicherungsbügel 2 bricht.

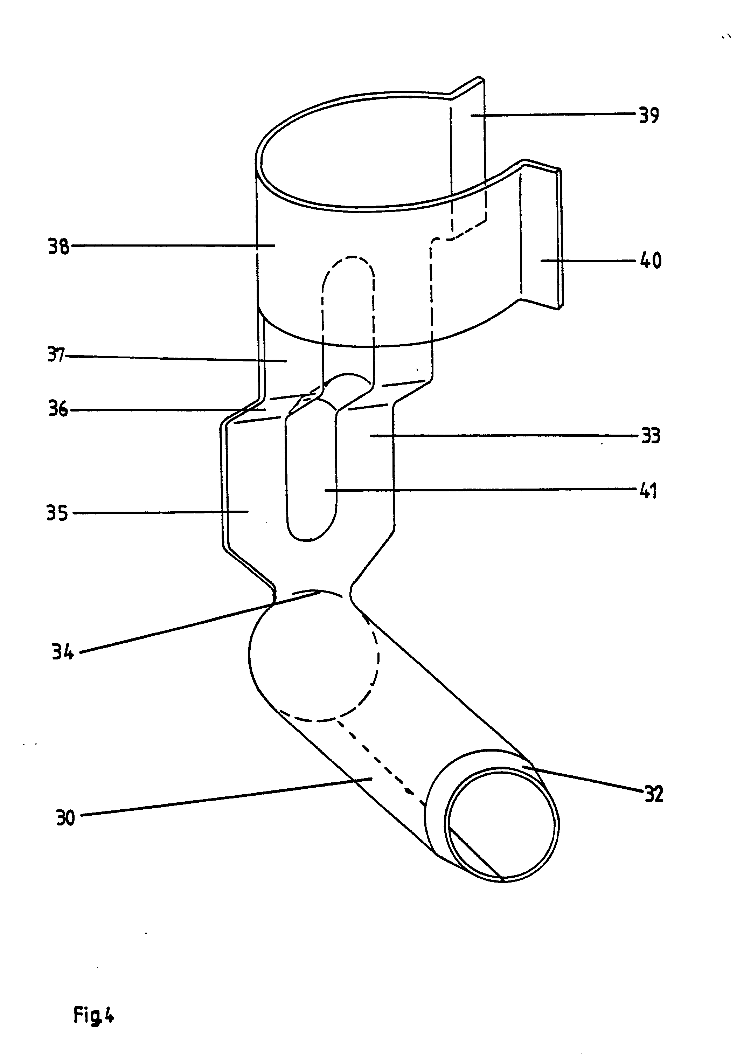

Fig. 4 zeigt eine weitere Ausführungsform des erfindungsgemäßen Steckbolzens, wobei der Sicherungsbügel hier so gestaltet ist, daß er auch an runden Bauteilen einrasten kann. Der Steckbolzen besteht aus dem gerollten bolzenförmigen Teil 30, das die axial verlaufende Naht 31 aufweist. Das bolzenförmige Teil weist im vorderen Bereich eine Abschrägung 32 auf, welche die Einführung in die Bauteilbohrung erleichtert. Der Sicherungsbügel 33 ist über ein Verbindungsstück 34 auf der der Naht gegenüberliegenden Seite des bolzenförmigen Teils 30 angeordnet. Der Sicherungsbügel weist eine erste Platte 35 auf, die senkrecht zur Achse des bolzenförmigen Teils 30 angeordnet ist. Daran schließt sich ein nach vorne abgekantetes Teil 36 an, auf das wieder ein senkrecht zur Bolzenachse angeordnetes Teil 37 folgt. Diese Abkantung hat den Vorteil, daß der Sicherungsbügel an einem runden Bauteil einrasten kann, welches senkrecht über dem bolzenförmigen Teil 30 angeordnet ist. Das Rastteil 38 ist, entsprechend der Bauteilgeometrie, mit rundem Querschnitt ausgebildet und einstückig mit den übrigen Teilen des Sicherungsbügels verbunden. An seiner vorderen Seite befinden sich zwei Abkantungeen 39 und 40, die das Aufschieben des Rastenteils auf das Bauteil erleichtern. Um die Festigkeit des Sicherungsbügels zu erhöhen, weist er eine senkrecht zur Bolzenachse verlaufende Verstärkungsrippe 41 auf. Des weiteren kann eine, hier nicht dargestellte Verstärkungsrippe vorgesehen werden, um das Verbindungsstück 34 zwischen dem Sicherungsbügel und dem Steckbolzen zu verstärken. Auch bei dieser Ausführung können Federzungen im bolzenförmigen Teil 30 vorgesehen werden, die den Bolzen auch dann sichern, wenn der Sicherungsbügel abbrechen sollte.

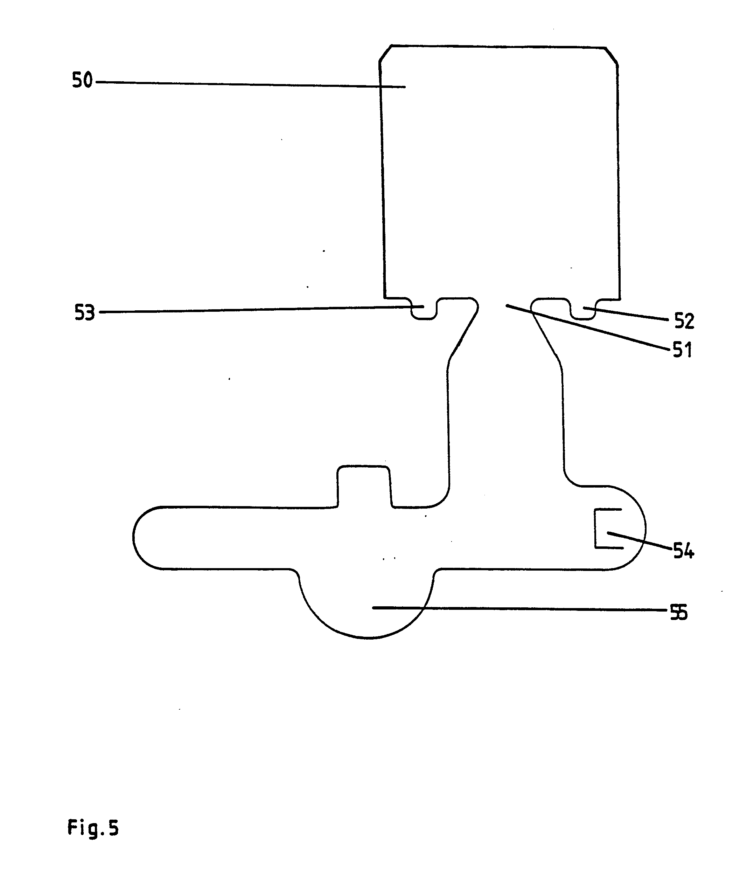

Fig. 5 zeigt die Abwicklung eines Ausführungsbeispiels gemäß Fig. I, allerdings ohne die dort gezeigte Federzunge I0. Wie die Figur zeigt, stellt die Abwicklung ein sehr kompaktes Teil dar, das durch entsechende gegeneinander versetzte Anordnung auf einer Grundplatte ein materialschonendes Ausstanzen des Steckbolzens ermöglicht. Die Abwicklung besteht aus einem nahezu rechteckigen Teil 50, welches nach dem Rollen das bolzenförmige Teil I bildet. Der Bolzen ist mit dem Sicherungsbügel über das Verbindungsstück 5I verbunden und weist zusätzliche Abkantungen 52 und 53 auf, die später die Abkantungen II bilden. Die Abwicklung weist des weiteren eine Ausstanzung 54 auf, die die Federzunge 8 bildet, sowie eine halbrunde Fläche 55, aus der die Druckplatte 5 a entsteht. Falls der Steckbolzen mit zusätzlichen Federzungen versehen werden soll, können diese in einfacher Weise in das rechteckige Teil 50 eingestanzt werden.

## Ansprüche

1. Aus Blech geformter Steckbolzen zum Verbinden eines ersten Bauteils mit einem zweiten Bauteil, der eine den Steckbolzen bildende zylindrische Hülse und einen damit einstückig über ein Verbindungstück verbundenen Sicherungsbügel aufweist, der an einem der beiden Bauteile einrastet, **dadurch gekennzeichnet,** daß die Hülse durch Rollen mit axial verlaufendem Spalt geformt ist, auf deren Stirnseite gegenüber dem Spalt das Verbindungsstück ansetzt.

2. Steckbolzen gemäß Anspruch I, dadurch gekennzeichnet, daß der Sicherungsbügel (2) eine sich senkrecht zur Achse des zylindrischen Bolzenteils (I;2I) erstreckende Anlagefläche (7) aufweist, die mit Abkantungen (5,6) zum Umgreifen des ersten oder des zweiten Bauteils versehen ist.

3. Steckbolzen gemäß einem der Ansprüche I oder 2, dadurch gekennzeichnet, daß die Verbindungsstelle zwischen dem zylindrischen Bolzenteil (I;2I) und dem Sicherungsbügel (2) eine Verstärkungsrippe (3) aufweist.

4. Steckbolzen gemäß einem der vorhergehenden Ansprüche, dadurch gekennzeichnet, daß die Abkantflächen (5,6) zum Umgreifen eines Bauteils mit rechteckförmigem Querschnitt im wesentlichen rechtwinklig zueinander angeordnet sind und eine Federzunge (8) zum Einrasten an dem Bauteil aufweisen.

5. Steckbolzen gemäß einem der Ansprüche 1 bis 3, dadurch gekennzeichnet, daß die Abkantflächen zum Umgreifen eines zylindrischen Bauteils kreisringförmig gestaltet sind.

6. Steckbolzen gemäß einem der vorhergehenden Ansprüche, dadurch gekennzeichnet, daß das zylindrische Bolzenteil (1;21) an seiner dem Sicherungsbügel (2) zugewandten Seite mindestens eine Abkantung (11) aufweist und daß an dem entgegengesetzten Ende des zylindrischen Bolzenteils (1;21) eine Federzunge angeordnet ist, die über den Außendurchmesser des Bolzenteils hinausragt.

7. Steckbolzen gemäß Anspruch 6, dadurch gekennzeichnet, daß eine oder mehrere Federzungen (10) vorgesehen sind, die aus dem Zylindermantel des zylinderförmigen Bolzenteils (1) ausgestanzt und nach außen gebogen sind.

8. Steckbolzen gemäß Anspruch 6, dadurch gekennzeichet, daß sich die Federzunge von der einen Seite des Zylindermantels des bolzenförmigen Teils (21) ausgeht und sich über einen Radius (22) und durch eine Aussparung (24) zur gegenüberliegenden Seite des Zylindermantels hin erstreckt.

9. Steckbolzen gemäß Anspruch 7, dadurch gekennzeichnet, daß die Federzunge an ihrem vorderen, dem Bauteil gegenüberliegenden Teil eine rechtwinklig nach unten, in Richtung auf die Zylinderachse (26) des bolzenförmigen Teils (21) gerichtete Abkantung aufweist.

Fig. 1

10    6 a    7

8

1a    1    6    5    2

Fig. 2

Fig. 3

Fig 4

Fig.5

**Europäisches Patentamt**

# EUROPÄISCHER RECHERCHENBERICHT

Nummer der Anmeldung

EP 87 10 2186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 133 596 (BENDIX)<br>* Figuren 2, 3 *<br><br>--- | 1 | F 16 B 21/10 |
| A | DE-A-2 040 303 (AMP)<br>* Figur 1 *<br><br>--- | 1 | |
| A | FR-A-1 196 557 (F.T. PRODUCTS)<br>* Figur 3 *<br><br>--- | 1 | |
| A | US-A-2 733 083 (STRANGE)<br>* Figur 1 *<br><br>--- | 1 | |
| A | US-A-3 217 584 (AMESBURY)<br>* Spalte 1, Zeile 38 *<br><br>--- | 1 | |
| A,D | DE-C-3 347 502 (SAXONIA-FRANKE)<br><br>* Figur 1 *<br><br>----- | | **RECHERCHIERTE SACHGEBIETE (Int. Cl.4)**<br><br>F 16 B 21/00<br>F 16 B 41/00 |

Der vorliegende Recherchenbericht wurde für alle Patentansprüche erstellt.

| Recherchenort | Abschlußdatum der Recherche | Prüfer |
|---|---|---|
| BERLIN | 20-08-1987 | ZAPP E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82